# EUROPÄISCHE PATENTSCHRIFT

(11) **EP 1 330 685 B1**
(45) Veröffentlichungstag und Bekanntmachung des Hinweises auf die Patenterteilung: **12.12.2012**
(21) Anmeldenummer: 01992912.4
(22) Anmeldetag: 26.10.2001
(51) Int. Cl.: G05B 19/042, G05B 19/05

(54) **PRÜFVERFAHREN UND PRÜFVORRICHTUNG ZUR INBETRIEBNAHME VON MITTELS EINER PROGRAMMLOGIK GESTEUERTEN SYSTEMEN**
TESTING METHOD AND TESTING DEVICE FOR STARTING UP SYSTEMS WHICH ARE CONTROLLED BY MEANS OF A PROGRAM LOGIC
PROCEDE ET DISPOSITIF DE CONTROLE DESTINES A LA MISE EN SERVICE DE SYSTEMES COMMANDES AU MOYEN D'UNE LOGIQUE DE PROGRAMME

(30) Priorität: 03.11.2000 DE 10054542
(43) Veröffentlichungstag der Anmeldung: 30.07.2003
(73) Patentinhaber: SIEMENS AKTIENGESELLSCHAFT, 80333 München (DE)
(72) Erfinder: OPATERNY, Thilo, 90453 Nürnberg (DE)
(86) Internationale Anmeldenummer: PCT/DE2001/004067
(87) Internationale Veröffentlichungsnummer: WO 2002/037197

(56) Entgegenhaltungen:
- EP-A- 0 483 368
- US-A- 6 106 572
- PATENT ABSTRACTS OF JAPAN vol. 1998, no. 11, 30. September 1998 (1998-09-30) & JP 10 149212 A (MITSUBISHI ELECTRIC CORP), 2. Juni 1998 (1998-06-02)

## Beschreibung

Die Erfindung betrifft ein Prüfverfahren und eine Prüfvorrichtung zur Inbetriebnahme von mittels einer Programmlogik gesteuerten Systemen, vorzugsweise von Automatisierungssystemen.

Automatisierungssysteme stellen in der Regel permanent laufende und sich dabei selbst steuernde und/oder regelnde kybernetische Systeme dar. Zur Steuerung dieser Abläufe werden Programmlogiken eingesetzt, die üblicherweise aus Programmmodulen zusammengesetzt sind, die bedarfsweise und immer wiederkehrend aufrufbar sind. Die hierzu erforderliche Programmiertechnik wird als zyklische Programmierung bezeichnet.

Der Programmierer muss zur Lösung einer Steuerungs- und/oder Regelungsaufgabe die jeweilige Aufgabe möglichst zerlegen, so dass er sie in Teilaufgaben aufspaltet und zu deren Lösung wiederverwendbare Module programmiert. Im Falle von graphischen Programmiersprachen, wie etwa Kontaktplan oder Funktionsplan, spricht man davon, dass die betreffenden Anwenderprogramme aus Bausteinen zusammengesetzt sind. Diese Bausteine bestehen aus Netzwerken. Die Netzwerke stellen Operationen dar, die die innerhalb der Programmlogik verwendeten Operanden miteinander verknüpfen. Die Netzwerke stellen letztlich eine logische Verknüpfung der verwendeten Operanden dar.

Jeder innerhalb des beschriebenen Netzwerks verwendete Baustein einer Schnittstelle kann von anderen Bausteinen aufgerufen werden. Die jeweiligen Bausteine werden im Programm mittels eines entsprechenden Aufrufs aufgerufen. Nach Ablauf des betreffenden Bausteins springt das Programm an eine Rücksprungadresse zurück, die den Ort des auf den Bausteinaufruf folgenden Statements bezeichnet. Üblicherweise werden hierzu die benötigten Rücksprungadressen auf einem so genannten Stapel abgelegt. Bei jedem Aufruf eines weiteren Bausteins muss eine zusätzliche Rücksprungadresse auf dem Stapel hinterlegt werden. Der Stapel wächst somit bei jedem Bausteinaufruf. Nach Rückkehr des Programms an die angegebene Rücksprungadresse muss die Information der Rücksprungadresse nicht weiter gespeichert werden. Der abgelegte Stapel schrumpft um diese Information. Die Rücksprungadresse besteht aus einem Baustein-Bezeichner, also der Bezeichnung des aufrufenden Bausteins, und dem Wert des Adresszählers, der den Ort des nach Ablauf des aufgerufenen Bausteins auszuführenden Programmstatements bezeichnet. Die Rücksprungadresse bzw. die in dem Stapel abgelegte Information zu jedem Bausteinaufruf stellt somit eine eindeutige Bezeichnung des jeweiligen Bausteinaufrufs dar.

Aus der US 6 106 572 A sind ein Verfahren und eine Vorrichtung zur Prüfung einzelner, nicht unbedingt direkt aufeinander folgend auszuführender Programmblöcke eines Softwareprogramms bekannt. Dabei können zu einzelnen Programmblöcken eine Eingang-Debug-Seite und eine Ausgang-Debug-Seite angezeigt werden. Auf der Eingang-Debug-Seite werden Strukturen von Daten angezeigt, mit denen der zugehörige Programmblock ausgeführt werden kann. Die Ausgang-Debug-Seite zeigt die Struktur von Daten, welche bei Ausführung des zugehörigen Programmblocks angezeigt werden. Diese Debug-Seiten dienen dazu, dass der Programmierer fehlerhafte Programmblöcke identifizieren kann.

Die EP 0 483 368 A1 beschreibt ein Verfahren, bei dem Netze in einer Anzeige eines Ablaufprogramms zur Suche und Verfolgung bei Vorwärts- und Rückwärtsschritten in dem Programm markiert werden können.

Im Zusammenhang mit der Inbetriebsetzung von Automatisierungssystemen stellt sich des Öfteren die Aufgabe, die zur Steuerung und/oder Regelung des Automatisierungssystems eingesetzte Programmlogik in bestimmten Situationen, also unter bestimmten Parametern beobachten zu wollen. Dabei erfordert das Beobachten des Programms unter bestimmten definierten Bedingungen oftmals die Beobachtung eines bestimmten Bausteins.

Der Erfindung liegt daher die Aufgabe zugrunde, ein Prüfverfahren und eine Prüfvorrichtung für Programmlogiken, insbesondere zum Einsatz in Automatisierungssystemen, zu schaffen, das bzw. die die Auswahl eines bestimmten Ablaufs eines ausgewählten Bausteins zu dessen Beobachtung ermöglicht.

Die Lösung dieser Aufgabe gelingt mittels eines Prüfverfahrens mit den Merkmalen des Anspruchs 1 sowie durch eine Prüfvorrichtung mit den Merkmalen des Anspruchs 7.

Vorteilhafte Ausgestaltungen der erfindungsgemäßen Lösung sind gemäß den Merkmalen der Ansprüche 2 bis 6 sowie der Ansprüche 8 und 9 gegeben.

Die Definition eines bestimmten Bausteinaufrufs durch den Inbetriebsetzer stellt ein erhebliches Problem dar, da aufgrund üblicherweise in Programmen angelegten Rekursionen, also der Tatsache, dass innerhalb der aufgerufenen Bausteine wiederum Bausteine, möglicherweise sogar der aufgerufene Baustein selbst, aufgerufen werden, die Aufrufe relativ unübersichtlich sind. Die Auswahl eines bestimmten Aufrufs erfordert daher zunächst die Prüfung aller möglichen Bausteine und aller möglichen Aufrufpfade, um sicher zu sein, auch den gewünschten Aufruf des ausgewählten Bausteins zu bestimmen. Die zur Definition eines bestimmten Aufrufs möglicherweise geeignete Rücksprungadresse steht dabei üblicherweise nicht zur Verfügung.

Bei dem erfindungsgemäßen Verfahren wird anhand einer in den unterschiedlichen Übersetzungsläufen der Programmlogik entstehenden Querverweisliste aller in der Programmlogik eingesetzten Bezeichner und deren Verwendungsstellen zunächst hinsichtlich hier interessierenden Baustein-Bezeichnern und deren Verwendungsstellen selektiert. Mit dieser Liste der Baustein-Bezeichner kann dann der im Zusammenhang mit dem zur Überprüfung anstehenden Programmteil interessierende Baustein-Bezeichner ausgewählt werden. Zu diesem ausgewählten Baustein wird eine Übersichtsdarstellung der Aufrufe oder eines Teils der Aufrufe erzeugt und dargestellt. Aus der Erkenntnis heraus, dass der Durchlauf eines Bausteins durch seinen Aufruf eindeutig definiert ist, kann dann anhand der erwähnten Übersichtsdarstellung eine eindeutige Auswahl des bestimmten Aufrufs und damit eines bestimmten Durchlaufs des Bausteins erfolgen, wobei genau dieser Durchlauf des Bausteins zur Beobachtung ausgegeben wird.

Das erfindungsgemäße Prüfverfahren stellt somit ein Werkzeug für den Programmierer oder Inbetriebnehmer eines Automatisierungssystems bereit, mit dessen Hilfe er einen bestimmten Bausteinaufruf auswählen und den Durchlauf dieses Bausteinaufrufs zu Prüfzwecken verfolgen kann.

Ein derartiges Prüfverfahren ist insbesondere in Verbindung mit den beschriebenen graphischen Programmiersprachen hilfreich. Die Leistungsfähigkeit aber auch die Komplexität dieser Sprachen erfordern besondere Prüfverfahren.

Ausgangspunkt des Prüfverfahrens ist die Generierung einer Querverweisliste, die sämtliche Verwendungsstellen der eingesetzten Bezeichner, also auch der interessierenden Baustein-Bezeichner umfasst. Die Querverweisliste umfasst somit zu jedem Aufruf den jeweiligen Baustein-Bezeichner und dessen Rücksprungadresse. Anhand der Rücksprungadresse ist jeder Aufruf eines Bausteins eindeutig definiert. Insofern kann aus dieser bei den Übersetzungsläufen der Programmlogik gewonnenen Information eine Übersichtsdarstellung der Aufrufe eines ausgewählten Bausteins errechnet werden. Die Querverweisliste kann ohne zusätzliche Prozessorleistung gewonnen werden, da sie üblicherweise bei der Übersetzung der Programmlogik erzeugt wird. Im Rahmen der erfindungsgemäßen Lösung wird diese Querverweisliste zwischengespeichert und steht anschließend zur weiteren Verwendung und Auswertung bereit.

In vorteilhafter Ausgestaltung ist die Übersichtsdarstellung der Aufrufe eines ausgewählten Bausteins als hierarchischer Aufrufbaum aufgebaut. Diese Übersicht lässt die Rangfolge und insbesondere die Rekursionen für den Inbetriebsetzer bzw. Programmierer auf einen Blick sichtbar werden.

Zur Vermeidung der Erzeugung einer Endlosschleife wird die Berechnung eines Aufrufpfads bei der Mehrfachnennung einer Rücksprungadresse abgebrochen.

Der Nachteil, derart rekursive Aufrufe nicht in frei wählbaren Tiefen anzeigen und auswählen zu können, ist zur Vermeidung von Systemabstürzen und der verbesserten Übersichtlichkeit der Darstellung hinnehmbar.

Diese Darstellung gestattet es dann, durch einfache Markierung einer oder mehrerer Zeilen einen oder mehrere Aufrufe des ausgewählten Bausteins eindeutig zu definieren.

Solcher Art ausgewählte Aufrufe können dann mit Vorteil in einem entsprechenden Beobachtungsverfahren vom Programmierer oder Inbetriebsetzer verfolgt werden.

Die zur Lösung der erfindungsgemäßen Aufgabe vorgelegte Prüfvorrichtung stellt vorteilhafterweise eine Anzeigevorrichtung für die hierarchische Darstellung der Aufrufe eines ausgewählten Bausteins bereit.

Zusätzlich ist diese Prüfvorrichtung in vorteilhafter Ausgestaltung mit einem Markierungswerkzeug versehen, mit dem in der erwähnten Anzeige und der Aufrufe eines Bausteins bestimmte Aufrufe markiert und ausgewählt werden können.

Die durch die Auswahl eines oder mehrerer Aufrufe eindeutig definierten Durchläufe eines Bausteins können dann mittels eines entsprechenden Beobachtungswerkzeuges zu Zwecken der Prüfung beobachtet werden.

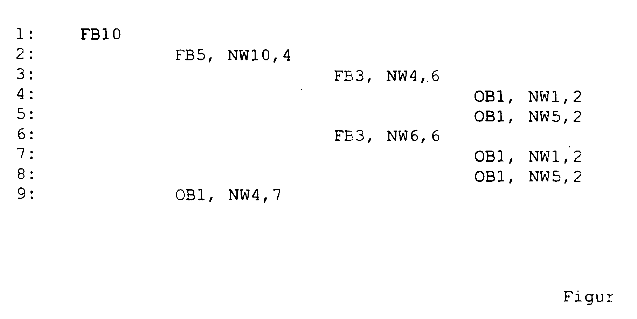

Die Erfindung wird nachstehend anhand eines Ausführungsbeispiels näher erläutert. Hierzu ist in der Zeichnung eine mögliche Darstellung der Aufrufe eines Bausteins dargestellt. Die Figur zeigt einen Aufrufbaum.

Nach der Implementierung einer zur Steuerung/Regelung eines Automatisierungssystems eingesetzten Programmlogik muss diese zunächst in die Maschinensprache übersetzt werden. Dabei wird im Rahmen eines speziellen Übersetzungsschritts eine Querverweisliste erstellt. Die Querverweisliste enthält alle innerhalb der übersetzten Programmlogik enthaltenen Bezeichner. Fasst man die während sämtlicher Übersetzungsschritte gewonnenen Querverweislisten zusammen, so entsteht eine Querverweisliste, die sämtliche innerhalb der Programmlogik verwendeten Bezeichner und deren Verwendungsstellen umfasst. Diese Querverweisliste wird zur späteren Auswertung zwischengespeichert.

In einem weiteren Schritt werden aus der Querverweisliste sämtliche Baustein-Bezeichner selektiert. Es entsteht somit eine Untermenge der erwähnten Querverweisliste, die sämtliche Baustein-Bezeichner und deren Verwendungsstellen umfasst.

Aus dieser Teilliste kann nun mittels eines entsprechenden Markierungswerkzeugs ein bestimmter Baustein-Bezeichner und damit ein Baustein ausgewählt werden. Anhand der in der Querverweisliste enthaltenen Informationen, also der diesem Baustein-Bezeichner zugeordneten Verwendungsstellen, wird dann ein Aufrufbaum berechnet. Die Verwendungsstellen umfassen den Bausteinaufruf und die Rücksprungadresse. Die Rücksprungadresse bezeichnet den Ort des nach Durchlauf des Bausteins abzuarbeitenden Programmstatements sowie die Bezeichnung des aufrufenden Bausteins. Aus diesen Informationen kann der Aufrufbaum berechnet werden.

Hierzu wird die entsprechend selektierte Querverweisliste hinsichtlich eines ausgewählten Baustein-Bezeichners derart ausgewertet, dass in einem ersten Schritt alle Verwendungsstellen des ausgewählten Baustein-Bezeichners, also alle diesen ausgewählten Baustein aufrufenden Bausteine zusammengestellt werden und in einem nächsten Schritt zur Analyse der nächsttieferen Rekursionsebene wiederum die aufrufenden Bausteine dieser Bausteine erfasst werden und so weiter, bis schließlich alle Aufrufpfade vollständig erfasst sind.

Bei der Berechnung des Aufrufbaumes wird ein Algorithmus verwendet, der Rekursionen erkennt. Hierzu wird jeder in dem Aufrufbaum enthaltene Aufrufpfad dahingehend überprüft, ob eine Rücksprungadresse mehrfach auftaucht. In diesem Fall wird die Berechnung des Aufrufpfads abgebrochen und der entsprechende Pfad markiert. Die Berechnung des Aufrufbaums wird dann anhand der weiteren Verwendungsstellen fortgesetzt. Ansonsten würde das Programm zur Berechnung des Aufrufbaums an dieser Stelle in eine Endlosschleife geraten.

Anschließend kann auch der die Rekursion enthaltende Aufrufpfad zur Betrachtung ausgewählt werden. Allerdings kann hierbei die Rekursionstiefe aufgrund des vorstehend beschriebenen Programmabbruchs nicht näher bestimmt werden.

Unbeschadet dieser Einschränkung steht am Ende der Übersetzung der Verwendungsstelle eines ausgewählten Baustein-Bezeichners eine Übersichtsdarstellung in Form des in der Figur dargestellten Aufrufbaums zur Verfügung.

Der in der Figur dargestellte Aufrufbaum umfasst neun bezifferte Zeilen 1 - 9. In dem Ausführungsbeispiel sind die Baustein-Bezeichner FB10, FB5, FE3, OB1 enthalten. Es handelt sich um den Aufrufbaum des Baustein-Bezeichners FB10. Der Baustein FB10 wird gemäß der Darstellung des Aufrufbaums in den Zeilen 2 und 9 von den Bausteinen FB5 und OB1 aufgerufen. Dabei wird der Baustein FB5 gemäß den Darstellungen in den Zeilen 3 und 6 seinerseits von dem Baustein FB3 aufgerufen. Der Baustein FB3 wird gemäß den Zeilen 4, 5, 7 und 8 von dem Baustein OB1 aufgerufen. Der Aufrufbaum enthält überdies die Information über den Aufrufort des jeweiligen Bausteins. So wird der Baustein FB10 gemäß Zeile 2 vom Baustein FB5 durch die vierte Operation eines Netzwerks NW10 aufgerufen.

Der Baustein FB5 wird seinerseits gemäß Zeile 3 durch die sechste Operation des Netzwerks NW4 aufgerufen.

Der in der Figur dargestellte Aufrufbaum wird mittels eines Viewers dem Benutzer oder dem Inbetriebsetzer dargestellt. Diesem Viewer ist ein Markierungswerkzeug zur Auswahl einzelner Zeilen und damit eines bestimmten Aufrufpfades zugeordnet. Durch die Selektion einzelner Zeilen kann somit ein bestimmter Aufruf eines bestimmten Bausteins definiert werden.

Der spaltenweise Versatz der einzelnen Zeilen 1 - 9 dokumentiert dabei die unterschiedlichen Rekursionsebenen.

Wählt bei dem hier vorliegenden Ausführungsbeispiel der Anwender die Zeile 5, so ist hierdurch der Aufruf des Bausteins FB10 definiert, der durch den Baustein FB5 im Netzwerk NW10 bei der vierten Operation verursacht wird, wenn dieser Baustein FB5 vom Baustein FB3 im Netzwerk NW4 bei der sechsten Operation aufgerufen wird und wiederum dieser Baustein FB3 vom Baustein OB1 im Netzwerk NW5 bei der zweiten Operation ausgewählt wird.

Durch einfache Markierung einer einzelnen Zeile im Aufrufbaum kann also ein ausgesprochen schwierig verschachtelter Aufruf eindeutig und in einfacher Weise ausgewählt werden. Hierdurch ist ein bestimmter Ablauf des Bausteins FB10 markiert. Diese eindeutige Definition eines bestimmten Bausteinaufrufs, hier des Bausteins FB10, wird dann an ein Beobachtungswerkzeug übergeben, das genau diesen Durchlauf des Bausteins FB10 anzeigt.

Durch Auswahl bestimmter Zeilen können auch nur Teile eines Aufrufpfades ausgewählt werden. Im vorliegenden Beispiel kann durch Selektion der Zeile 2 definiert werden, dass der Baustein FB10 nur beobachtet wird, wenn er vom Baustein FB5 durch die vierte Operation im Netzwerk NW10 aufgerufen wird.

Allerdings erfolgt eine Beobachtung des Bausteins FB10 unabhängig davon, ob der Baustein FB5 vom Baustein FB3 im Netzwerk NW4 oder NW6 aufgerufen wird. Letztlich sind somit durch die Auswahl der Zeile 2 mehrere Aufrufe des Bausteins FB10 markiert. Eine derartige Auswahl wäre dann sinnvoll, wenn feststeht, dass zwar ein bestimmter Baustein überprüft werden soll, aber nicht genau feststeht, welcher Aufruf beobachtet werden soll.

Vorstehend ist somit ein Prüfverfahren und eine Prüfvorrichtung beschrieben, die mit einem bisher nicht erreichten Bedienkomfort den Inbetriebsetzer oder Programmierer eines Automatisierungssystems in die Lage versetzt, gezielt bestimmte Aufrufe eines ausgewählten Bausteins zu definieren und diese somit zur weiteren Beobachtung auszuwählen.

## Patentansprüche

1. Prüfverfahren zur Inbetriebnahme von mittels einer Programmlogik gesteuerten Automatisierungssystemen,
wobei die Programmlogik in einer graphischen Programmiersprache, vorzugsweise Kontaktplan oder Funktionsplan, implementiert ist und im Wesentlichen aus Bausteinen (OB1, FB3, FB5, FB10) zusammengesetzt ist,
bei dem folgende Schritte durchlaufen werden:
- Generierung einer vorzugsweise vollständigen Querverweisliste mit allen innerhalb der Programmlogik eingesetzten Baustein-Bezeichnern und deren jeweiliger Verwendungsstellen,
- Selektion der zur Bezeichnung von Bausteinen (OB1, FB3, FB5, FB10) in der Programmlogik eingesetzten Baustein-Bezeichner und deren jeweiliger Verwendungsstellen, die den Bausteinaufruf und dessen jeweilige Rücksprungadresse umfassen,
- Generierung einer Übersichtsdarstellung aller oder eines Teils der Aufrufe eines auswählbaren, von dem jeweiligen Baustein-Bezeichner bezeichneten Bausteins (OB1, FB3, FB5, FB10) zur
- eindeutigen Auswahl eines oder mehrerer bestimmter Aufrufe dieses Bausteins (OB1, FB3, FB5, FB10) zur
- Beobachtung dieses oder dieser derart eindeutig definierten Ablaufs bzw. der Abläufe des ausgewählten Bausteins (OB1, FB3, FB5, FB10) mittels eines entsprechenden Editors,
- wobei die Übersichtsdarstellung der Aufrufe eines ausgewählten Bausteins (OB1, FB3, FB5, FB10) nach einer Auswertung der den ausgewählten Baustein (OB1, FB3, FB5, FB10) betreffenden Rücksprungadressen in der Art eines hierarchischen Aufrufbaumes mittels eines entsprechenden Viewers zur Anzeige gelangt.

2. Prüfverfahren nach Anspruch 1, **dadurch gekennzeichnet, dass** die Berechnung eines Aufrufpfades des ausgewählten Bausteins (OB1, FB3, FB5, FB10) im Falle einer Mehrfachnennung einer Rücksprungadresse abgebrochen wird.

3. Prüfverfahren nach Anspruch 1 oder 2, **dadurch gekennzeichnet, dass** dem Viewer ein Markierungswerkzeug zur Markierung einer oder mehrerer Zeilen (1-9) des Aufrufbaumes zugeordnet ist und hierdurch jeweils ein oder mehrere Aufrufe des ausgewählten Bausteins (OB1, FB3, FB5, FB10) eindeutig definiert werden.

4. Prüfverfahren nach Anspruch 3, **dadurch gekennzeichnet, dass** der durch die Markierung einer oder mehrerer Zeilen (1-9) des Aufrufbaums eindeutig definierte Aufruf eines ausgewählten Bausteins (OB1, FB3, FB5, FB10) angezeigt wird.

## Claims

1. Testing method for starting up automation systems which are controlled by means of a program logic,
wherein the program logic is implemented in a graphical programming language, preferably contact plan or function plan, and is essentially composed of modules (OB1, FB3, FB5, FB10),
in which the following steps are run:
- generating a preferably complete cross reference list with all module designators used within the program logic, and their respective places of use,
- selecting the module designators used for designating modules (OB1, FB3, FB5, FB10) in the program logic and their respective places of use which comprise the module call-up and its respective return address,
- generating an overview representation of all or a part of the call-ups of a selectable module (OB1, FB3, FB5, FB10) designated by the respective module designator, for
- unambiguous selection of one or more particular call-ups of this module (OB1, FB3, FB5, FB10) for
- observing this or these call-up(s) defined unambiguously in this manner or of the call-ups of the selected module (OB1, FB3, FB5, FB10) by means of a corresponding editor,
- wherein the overview representation of the call-ups of a selected module (OB1, FB3, FB5, FB10), after an evaluation of the return addresses relating to the selected module (OB1, FB3, FB5, FB10), is displayed by means of a corresponding viewer in the manner of a hierarchical call-up tree.

2. Testing method according to Claim 1, **characterized in that** the calculation of a call-up path of the selected module (OB1, FB3, FB5, FB10) is aborted in the case of a multiple nomination of a return address.

3. Testing method according to Claim 1 or 2, **characterized in that** the viewer is allocated a marking tool for marking one or more lines (1-9) of the call-up tree and by this means one or more call-ups of the selected module (OB1, FB3, FB5, FB10) are in each case defined unambiguously.

4. Testing method according to Claim 3, **characterized in that** the call-up, defined unambiguously by the marking of one or more lines (1-9) of the call-up tree, of a selected module (OB1, FB3, FB5, FB10) is displayed.

## Revendications

1. Procédé de contrôle de la mise en service de systèmes d'automatisation commandés au moyen d'une logique de programme,
dans lequel la logique de programme est mise en oeuvre dans un langage de programmation graphique, de préférence dans un plan de contact ou dans un plan de fonction, et est composée essentiellement de modules ( OB1, FB3, FB5, FB10 ),
dans lequel on effectue les stades suivantes :
- production d'une liste de références croisées, de préférence complète, ayant tous les désignateurs de module utilisé au sein de la logique de programme et leurs points d'utilisation respectifs,
- sélection des désignateurs de module utilisés dans la logique de programme pour la désignation de module ( OB1, FB3, FB5, FB10 ) et de leurs point d'utilisation respectifs, qui comprennent l'appel du module et son adresse de retour respective,
- production d'une représentation d'ensemble de tous les appels ou d'une partie des appels d'un module ( (OB1, FB3, FB5, FB10 ) pouvant être choisi et désigné par le désignateur de modèle respectif pour
- la sélection univoque d'un ou plusieurs appels déterminés de ce module ( OB1, FB3, FB5, FB10 ) pour
- l'observation du déroulement ou des déroulements définis ainsi d'une manière univoque du module ( OB1, FB3, FB5, FB10 ) sélectionné au moyen d'un éditeur correspondant,
- dans lequel la représentation d'ensemble des appels d'un module ( OB1, FB3, FB5, FB10 ) sélectionné est obtenue après une exploitation des adresses de retour concernant le module ( OB1, FB3, FB5, FB10 ) sélectionné à la manière d'un arbre d'appel hiérarchique au moyen d'un visualisateur correspondant pour l'affichage.

2. Procédé de contrôle suivant la revendication 1, **caractérisé en ce que** le calcul d'un trajet d'appel du module ( OB1, FB3, FB5, FB10 ) sélectionné est interrompu dans le cas d'une nomination multiple d'une adresse de retour.

3. Procédé de contrôle suivant la revendication 1 ou 2, **caractérisé en ce qu'**au visionneur est associé un outil de repérage pour le repérage d'une ou de plusieurs lignes ( 1 à 9 ) de l'arbre d'appel et respectivement un ou plusieurs appels du module ( OB1, FB3, FB5, FB10 ) sélectionné sont ainsi définies d'une manière univoque.

4. Procédé de contrôle suivant la revendication 3, **caractérisé en ce que** l'appel défini d'une manière univoque par le repérage d'une ou de plusieurs lignes ( 1 à 9 ) de l'arbre d'appel d'un module ( OB1, FB3, FB5, FB10 ) sélectionné est affiché.
